# EUROPÄISCHE PATENTANMELDUNG

(11) **EP 4 086 456 A1**
(43) Veröffentlichungstag der Anmeldung: **09.11.2022**
(21) Anmeldenummer: 21172705.2
(22) Anmeldetag: 07.05.2021
(51) Int. Cl.: F03D 7/04, F03D 17/00, F03D 80/50, G06F 21/33

(54) **VERFAHREN UND VORRICHTUNGEN FÜR EINEN ZUGRIFF AUF EINE WINDENERGIEANLAGE MIT EINER WINDENERGIEANLAGENSTEUERUNG**

(71) Anmelder: Wobben Properties GmbH, 26607 Aurich (DE)
(72) Erfinder: Giertz, Helge, 26789 Leer (DE)
(74) Vertreter: Eisenführ Speiser

(57) **Zusammenfassung**

Die Erfindung betrifft ein Verfahren für einen Zugriff auf mindestens eine Funktion (44) einer Windenergieanlage (100) mit einer Windenergieanlagensteuerung (10), wobei die Windenergieanlagensteuerung (10) eine Zugriffsberechtigungsliste (26) aufweist, die gegen Umprogrammierung, insbesondere durch einen Fernzugriff, gesichert ist, wobei die Zugriffsberechtigungsliste (26) mehrere Einträge (28) aufweist, die jeweils eine Benutzerkennung (30) und vorzugsweise ein Passwort (32) umfassen, und das Verfahren ein Empfangen einer Sperrliste (50) durch die Windenergieanlagensteuerung (10) über einen Fernzugriff, wobei die Sperrliste (50) mindestens einen Eintrag (52) aufweist, der zumindest eine Sperrkennung (48) umfasst und ein Verhindern eines Zugriffs auf die mindestens eine Funktion, wenn über eine Eingabe eine Benutzerkennung (30) empfangen wird, die einer Sperrkennung (48) entspricht, umfasst.

Die Erfindung betrifft ferner eine Windenergieanlagensteuerung (10), eine Windenergieanlage (100), eine Leitstelle und ein System.

## Beschreibung

Die Erfindung betrifft ein Verfahren für einen Zugriff auf eine Windenergieanlage mit einer Windenergieanlagensteuerung sowie eine Windenergieanlagensteuerung für das Verfahren. Außerdem betrifft die Erfindung eine Windenergieanlage mit der erfindungsgemäßen Windenergieanlagensteuerung und eine Leitstelle für das Verfahren.

Es sind Windenergieanlagen bekannt, die eine Windenergieanlagensteuerung aufweisen, auf die ein Zugriff von außerhalb durch Personen, wie Mitarbeiter und Servicepersonal, möglich ist. Um einen Zugang zur oder Zugriff auf die Steuerung zu erhalten, haben die Personen in der Regel Zugangsdaten, die an einem Terminal eingegeben werden. Zum Abgleich, ob diese Zugangsdaten einen Zugriff erlauben oder verbieten, sind in der Steuerung die Zugangsdaten, die einen Zugriff erlauben, hinterlegt.

Hierbei werden die Zugangsdaten zusammen mit einer Steuerungssoftware der Windenergieanlagensteuerung häufig in einem Speicher, der im normalen Betrieb nur lesbar und gegen ein Überschreiben gesichert ist, hinterlegt. Dadurch wird sichergestellt, dass hinterlegte Zugangsdaten nicht einfach durch eine Person während eines Servicezugriffs bei einem normalen Betrieb der Windenergieanlage geändert oder manipuliert werden.

Demgegenüber ist jedoch eine Aktualisierung der Zugangsdaten nötig, um beispielsweise Zugänge von Personen, die ausgeschieden sind, zu löschen. Zur Durchführung einer derartigen Löschung der Zugangsdaten sind spezielle Voraussetzungen zu erfüllen, die beispielsweise auch dann zu erfüllen sind, wenn eine Software der Windenergieanlage aktualisiert werden soll. Mit einer neuen Steuerungssoftware werden demnach häufig auch in einem Zuge hinterlegte Zugangsdaten aktualisiert. Beispiele für die genannten speziellen Voraussetzungen, um eine derartige Aktualisierung ausführen zu können sind etwa, dass vor Ort an der Windenergieanlagensteuerung spezielle Hardwaremodifikationen, wie etwa bestimmte Schalterstellungen, vorgenommen werden müssen, und/oder spezielle Zugangsdaten, etwa Einmalpasswörter, verwendet werden müssen, die nur einem sehr begrenztem Personenkreis bekannt sind.

Eine regelmäßige Aktualisierung der Software der Windenergieanlagensteuersysteme sowie einhergehende Aktualisierungen der Zugangsdaten für einen Zugriff auf die Windenergieanlagensteuerung können jedoch zunehmend nicht mehr in regelmäßigen Intervallen gewährleistet werden. Gründe hierfür sind immer aufwendiger zu planende Zugangsmöglichkeiten sowie auch wirtschaftliche Abwägungen, da beispielsweise der personelle Aufwand für eine Aktualisierung sehr hoch ist.

Durch eine sehr unregelmäßige Aktualisierung der Software und der damit zusammenhängenden Aktualisierung der Zugangsdaten werden veraltete Zugangsdaten für einen Zugriff auf eine Windenergieanlagensteuerung häufig außerhalb überwachbar und protokollierbarer Situationen verwendet. Verlässt beispielsweise ein Servicemitarbeiter ein Unternehmen, das für den Service einer Windenergieanlage zuständig ist und somit für diesen Servicemitarbeiter Zugangsdaten im Nur-lese-Speicher hinterlegt sind, so kann dieser weiter auf die Windenergieanlage zugreifen, auch wenn dieser nicht mehr mit Dienstleistungen an der Windenergieanlage betraut ist. Hierdurch können unkontrollierbare Zugriffe auf eine Windenergieanlagensteuerung erfolgen, so dass sogar Einstellungen durch nicht mehr berechtigte Personen vorgenommen werden können, die zu Fehlverhalten der Anlage führen oder durch die Zertifikate, wie beispielsweise das Einheitenzertifikat einer Windenergieanlage, erlöschen können.

Aufgabe der vorliegenden Erfindung ist es daher, den Problemen des Standes der Technik zu begegnen. Ferner ist es Aufgabe der vorliegenden Erfindung den Zugriff von nicht mehr berechtigten Personen auf Windenergieanlagensteuerungen zu verhindern oder kontrollieren zu können. Zumindest soll eine Alternative zum Stand der Technik gefunden werden.

Hierzu betrifft die Erfindung ein Verfahren für einen Zugriff auf mindestens eine Funktion einer Windenergieanlage nach Anspruch 1.

Die Erfindung betrifft ein Verfahren für einen Zugriff auf mindestens eine Funktion einer Windenergieanlage mit einer Windenergieanlagensteuerung. Die Windenergieanlagensteuerung umfasst eine Zugriffsberechtigungsliste, die gegen Umprogrammierung, insbesondere durch einen Fernzugriff, gesichert ist. Ein Fernzugriff bezeichnet beispielsweise einen Zugriff über eine Internet- oder Ethernetverbindung mit der Windenergieanlagensteuerung durch ein Terminal, das beispielsweise ein entfernter Computer ist, das einen Zugriff anfordert. Die Zugriffsberechtigungsliste ist demnach nicht durch einen derartigen Fernzugriff umprogrammierbar. Ferner ist die Zugriffsberechtigungsliste innerhalb der Windenergieanlagensteuerung insbesondere innerhalb eines Nur-lese-Speichers, der auch "Read Only Memory" (ROM) genannt wird, gespeichert.

Die Zugriffsberechtigungsliste umfasst mehrere Einträge, wobei jeder Eintrag zumindest eine Benutzerkennung aufweist. Vorzugsweise ist jeder Benutzerkennung in dem jeweiligen Eintrag auch ein Passwort zugeordnet. Gemäß dem Verfahren wird eine Sperrliste an die Windenergieanlage über einen Fernzugriff gesendet. Die Sperrliste umfasst mindestens einen Eintrag, der zumindest eine Sperrkennung umfasst. Vorzugsweise umfasst die Sperrliste mehrere Einträge, die jeweils eine Sperrkennung umfassen.

Gemäß dem Verfahren wird ein Zugriff auf die mindestens eine Funktion der Windenergieanlagensteuerung verhindert, wenn über eine Eingabe eine Benutzerkennung empfangen wird, die einer Sperrkennung entspricht. Der Zugriff wird also in diesem Fall auch verhindert, wenn die Benutzerkennung in der Zugriffsberechtigungsliste enthalten ist. Die Zugriffsberechtigungsliste dient so, um Benutzerkennungen bereitzustellen, mit denen grundsätzlich ein Zugriff auf die Windenergieanlagensteuerung möglich ist, solange keine entsprechende Sperrkennung in der Sperrliste enthalten ist.

Bislang bestehende Windenergieanlagensteuerungen können demnach, vorzugsweise mit einer neuen Softwareversion, derart erweitert werden, dass vor dem Prüfen einer Zugriffsberechtigung anhand in der Windenergieanlagensteuerung hinterlegter Zugangsdaten zusätzlich Sperrkennungen einer Sperrliste berücksichtigt werden. Zugriffsberechtigungslisten, die in einem Nur-lese-Speicher hinterlegt sind, müssen demnach nicht angepasst werden, um Zugangsdaten von ausgeschiedenen Personen zu entfernen. Vielmehr genügt es, eine Sperrkennung für diese ausgeschiedene Person an die Windenergieanlage zu senden.

Beim Empfang von Zugangsdaten, wie einer Benutzerkennung einer Person, wird demnach nicht nur geprüft, ob diese Zugangsdaten, nämlich insbesondere die Benutzerkennung in der Windenergieanlagensteuerung in der Zugriffsberechtigungsliste hinterlegt ist, sondern auch, ob diese Zugangsdaten bzw. die Benutzerkennung als Sperrkennung in einer Sperrliste enthalten ist. Ist dies der Fall, ist also die Benutzerkennung zwar in der Zugriffsberechtigungsliste aber auch in der Sperrliste enthalten, so wird der Zugriff auf die Windenergieanlagensteuerung verhindert oder verwehrt. Eine Person mit dieser Benutzerkennung erhält also keinen Zugriff auf eine Funktion der Windenergieanlagensteuerung. Eine Person, deren Benutzerkennung in der Sperrliste enthalten ist, kann somit nicht mehr auf die Windenergieanlagensteuerung zugreifen, wohingegen Personen, deren Benutzerkennung nicht als Sperrkennung aber in der Zugriffsberechtigungsliste hinterlegt ist, weiterhin einen Zugriff auf die Windenergieanlagensteuerung haben und vorzugsweise auch die Sperrliste selbst anpassen können. Jedenfalls kann eine Sperrliste nicht von einer Person angepasst werden, deren Benutzerkennung durch die Sperrkennung für einen Zugriff gesperrt ist.

Gemäß einer ersten Ausführungsform weist jeder Eintrag in der Zugriffsberechtigungsliste oder die Zugriffsberechtigungsliste selbst eine Gültigkeitsdauer auf. Die Gültigkeitsdauer beträgt vorzugsweise höchstens drei Jahre oder höchstens fünf Jahre. Ein Zugriff auf die mindestens eine Funktion wird gemäß dieser Ausführungsform auch verhindert, wenn über eine Eingabe eine Benutzerkennung empfangen wird, die einer Benutzerkennung eines Eintrags einer Zugriffsberechtigungsliste entspricht, deren Gültigkeitsdauer abgelaufen ist.

Unabhängig von den Sperrlisten, verlieren somit die Einträge einer Zugriffsberechtigungsliste nach Ablauf der Gültigkeitsdauer der jeweiligen Einträge oder alle Einträge nach Ablauf der Gültigkeitsdauer der Zugriffsberechtigungsliste ihre Gültigkeit, so dass unabhängig von der Sperrliste einem Benutzer mit einer Benutzerkennung kein Zugriff auf die Funktion der Windenergieanlage gewährt wird auch wenn die Benutzerkennung in der Zugriffsberechtigungsliste enthalten ist. Vorzugsweise weist die gesamte Zugriffsberechtigungsliste eine Gültigkeitsdauer auf, so dass nach Ablauf der Gültigkeitsdauer kein Zugriff auf die Windenergieanlagensteuerung mehr mit den Benutzerkennungen der Zugriffsberechtigungsliste möglich ist.

Hierdurch wird sichergestellt, dass neben dem regelmäßigen Sperren von Personen, also Benutzern, mit Hilfe der Sperrlisten auch regelmäßig neue Benutzerkennungen durch Aktualisieren der Zugriffsberechtigungslisten hinterlegt werden können. Ein Betreiber wird nämlich durch die Gültigkeitsdauer veranlasst vor Ablauf der Gültigkeitsdauer eine Aktualisierung der Zugriffsberechtigungslisten, insbesondere durch Aktualisieren der Software einer Windenergieanlagensteuerung, auszuführen.

Gemäß einer weiteren Ausführungsform ist die Gültigkeitsdauer durch einen Zähler realisiert. Der Zähler beginnt vorzugsweise zu zählen oder neu zu zählen, sobald ein Zugriff auf die Windenergieanlagensteuerung das erste Mal möglich wird. Ein Zähler, der zur Festlegung der Gültigkeitsdauer verwendet wird, ist ein Zähler, der mit einem Initialwert beginnt und seinen Wert periodisch hoch oder herunter zählt, so dass mit Erreichen eines bestimmten Werts des Zählers, beispielsweise dem Wert Null, die Gültigkeitsdauer abgelaufen ist. Der Zählerwert wird zwischengespeichert und kann im normalen Betrieb nicht zurückgesetzt werden, nachdem ein Zugriff auf eine Windenergieanlage das erste Mal möglich wird. Eine Manipulation der Gültigkeitsdauer, beispielsweise durch Verändern eines Datums, ist somit nicht möglich.

Gemäß einer weiteren Ausführungsform ist in der Windenergieanlagensteuerung ein Generalpasswort hinterlegt. Ein Zugriff auf die mindestens eine Funktion wird verhindert, wenn über eine Eingabe eine Benutzerkennung empfangen wird, deren Gültigkeitsdauer abgelaufen ist. Eine Benutzerkennung kann entweder abgelaufen sein, indem ein Eintrag, in dem die Benutzerkennung in der Zugriffsberechtigungsliste enthalten ist, oder die gesamte Zugriffsberechtigungsliste abgelaufen ist. Ferner ist jedoch ein Zugriff auf die mindestens eine Funktion weiterhin möglich und wird von der Windenergieanlagensteuerung gewährt, wenn über die Eingabe das Generalpasswort empfangen wird.

Vorzugsweise ist das Generalpasswort einem nur sehr begrenzten Personenkreis bekannt oder umfasst beispielsweise auch nur ein Einmalpasswort. Im Fall, dass selbst nach Erhalten eines Hinweises auf einen bevorstehenden Ablauf einer Gültigkeitsdauer ein Betreiber einer Windenergieanlage keine Aktualisierung der Software und somit der Zugriffsberechtigungsliste durchführt, sind weiterhin nach Eingabe des Generalpassworts Zugriffe auf die Windenergieanlage möglich, um diese wieder in Betrieb zu setzen oder um eine neue Zugriffsberechtigungsliste mit einer neuen Gültigkeitsdauer zu hinterlegen.

Gemäß einer weiteren Ausführungsform wird ein Zugriff auf die Funktion erlaubt, wenn über eine Eingabe eine Benutzerkennung empfangen wird, die keiner Sperrkennung entspricht und insbesondere deren Gültigkeitsdauer, nämlich der Gültigkeitsdauer des entsprechenden Eintrags oder der gesamten Zugriffsberechtigungsliste, noch nicht abgelaufen ist. Berechtigten Personen wird somit ein Zugriff auf die Funktion erlaubt.

Gemäß einer weiteren Ausführungsform umfasst die Zugriffsberechtigungsliste eine Zugriffsberechtigungslistenversionsnummer und die Sperrliste eine Sperrlistenversionsnummer. Die Windenergieanlagensteuerung trifft eine Entscheidung, ob ein Zugriff auf die mindestens eine Funktion verhindert oder erlaubt wird, nur unter Berücksichtigung der Sperrliste, die eine Sperrlistenversionsnummer aufweist, die der Zugriffsberechtigungslistenversionsnummer der aktuellsten Zugriffsberechtigungsliste entspricht. Sind also in der Windenergieanlagensteuerung ältere Sperrlisten mit älteren Sperrlistenversionsnummern enthalten, in denen beispielsweise eine Person durch die seiner Benutzerkennung entsprechende Sperrkennung für einen Zugriff auf die Windenergieanlage gesperrt wurde, und wurde dieser Person ein Zugriff wieder erlaubt, indem eine aktuelle Zugriffsberechtigungsliste mit einer neuen Zugriffsberechtigungslistenversionsnummer wieder die Benutzerkennung dieser Person enthält, so wird, solange auch die aktuelle Sperrliste nicht eine Sperrkennung enthält, die der Benutzerkennung entspricht, ein Zugriff für den Benutzer wieder freigebbar. Durch Führen der Versionsnummern einerseits der Zugriffsberechtigungsliste und andererseits der Sperrliste kann sichergestellt werden, dass auch gesperrte Benutzer oder Personen später erneut einen Zugriff auf die Windenergieanlage erhalten können.

Gemäß einer weiteren Ausführungsform ist eine Leitstelle vorgesehen, die vorzugsweise einer entfernten, zentralen Stelle entspricht und die über ein Datennetzwerk mit einer Vielzahl von Windenergieanlagen und Windparks verbunden ist. Die mit der Leitstelle verbundenen Windparks speisen vorzugsweise jeweils an unterschiedlichen Einspeisepunkten ein. Die Leitstelle stellt ferner mehrere Sperrlisten mit unterschiedlichen Sperrlistenversionsnummern bereit. Von der Leitstelle werden die Sperrlisten zyklisch an die Windenergieanlagen ausgesendet.

Eine zentrale Verwaltung von zu sperrenden Benutzerkennungen durch Sperrkennungen wird durch Verteilen der Sperrlisten mittels einer Leitstelle möglich.

Gemäß einer weiteren Ausführungsform wird jede Sperrliste in mehrere Teile unterteilt. Mit jedem Zyklus sendet die Leitstelle jeweils einen Teil der Teile einer ersten Sperrliste aus, bis alle Teile der ersten Sperrliste ausgesendet sind. Daraufhin wird in den folgenden Zyklen jeweils ein Teil der Teile einer nächsten Sperrliste ausgesendet, bis alle Teile der nächsten Sperrliste ausgesendet sind. Nach Aussenden des letzten Teils einer letzten Sperrliste wird mit den darauffolgenden Zyklen erneut jeweils einer der Teile der ersten Sperrliste ausgesendet. In jedem Datenpaket eines Rundrufs an alle Windenergieanlagen kann so ein sehr geringer vordefinierter Bereich vorgesehen werden, der zum Verteilen der Teile der Sperrlisten vorgesehen ist. Mit jedem Rundruf werden somit nur wenige Benutzerkennungen durch Sperrkennungen für einen Zugriff gesperrt, wobei das zyklische Aussenden eines Rundrufs dazu führt, dass innerhalb vordefinierter Maximalzeiten jedoch alle Sperrlisten mit unterschiedlichen Sperrlistenversionsnummern regelmäßig aktualisiert werden.

Gemäß einerweiteren Ausführungsform werden in der Leitstelle nurdie Sperrlisten gespeichert und/oder ausgesendet, die Sperrlistenversionsnummern aufweisen, die den Zugriffsberechtigungslistenversionsnummern entsprechen, deren zugeordnete Zugriffsberechtigungslisten eine Gültigkeitsdauer aufweisen, die noch nicht abgelaufen ist.

Es wird somit verhindert, noch Sperrlisten auszusenden, die ohnehin von keiner Windenergieanlagensteuerung mehr berücksichtigt werden, bei der Entscheidung, ob ein Zugriff auf die mindestens eine Funktion verhindert oder erlaubt wird.

Ferner betrifft die Erfindung eine Windenergieanlagensteuerung für einen Zugriff auf mindestens eine Funktion einer Windenergieanlage, die insbesondere eingerichtet ist, das Verfahren nach einer der vorgenannten Ausführungsformen auszuführen. Die Windenergieanlagensteuerung weist einen Nur-lese-Speicher, der auch "Read Only Memory" (ROM) genannt wird, auf. Ferner weist die Windenergieanlagensteuerung einen Direktzugriffsspeicher, der auch "Random Access Memory" (RAM) genannt wird, auf. Die Zugriffsberechtigungsliste ist im Nur-lese-Speicher und die Sperrliste im Direktzugriffsspeicher gespeichert. Die Zugriffsberechtigungsliste umfasst mehrere Einträge, die jeweils eine Benutzerkennung und vorzugsweise ein Passwort umfassen. Die Sperrliste weist mindestens einen Eintrag mit einer Sperrkennung auf. Die Windenergieanlagensteuerung ist eingerichtet, um einen Zugriff auf die mindestens eine Funktion zu verhindern, wenn über eine Eingabe eine Benutzerkennung empfangen wird, die einer Sperrkennung entspricht. Gemäß einer Ausführungsform ist die Windenergieanlagensteuerung eingerichtet, einen Zugriff auf die Funktion zu erlauben, wenn über eine Eingabe eine Benutzerkennung empfangen wird, die keiner Sperrkennung aber einer Benutzerkennung entspricht, die in der Zugriffsberechtigungsliste enthalten ist, solange die Gültigkeitsdauer der Benutzerkennung in der Zugriffsberechtigungsliste vorzugsweise noch nicht abgelaufen ist.

Ferner betrifft die Erfindung eine Windenergieanlage mit einer Windenergieanlagensteuerung nach einer der vorgenannten Ausführungsformen. Die Windenergieanlage ist eingerichtet das Verfahren nach einer der vorgenannten Ausführungsformen auszuführen.

Außerdem betrifft die Erfindung eine Leitstelle für ein Verfahren nach einer der vorgenannten Ausführungsformen. Die Leitstelle ist eingerichtet, mehrere Sperrlisten bereitzustellen und an mehrere Windenergieanlagensteuerungen zyklisch, insbesondere über eine Netzwerkverbindung, auszusenden.

Gemäß einer Ausführungsform der Leitstelle ist diese eingerichtet, jede der hinterlegten Sperrlisten in mehrere Teile zu unterteilen. Ferner ist die Leitstelle gemäß dieser Ausführungsform eingerichtet, um mit jedem Zyklus jeweils einen Teil der Teile einer ersten Sperrliste auszusenden, bis alle Teile der ersten Sperrliste ausgesendet sind. Die Leitstelle ist außerdem eingerichtet, daraufhin in den folgenden Zyklen jeweils einen Teil der Teile einer nächsten Sperrliste auszusenden, bis alle Teile der nächsten Sperrliste ausgesendet sind. Weiter ist die Leitstelle eingerichtet, um nach Aussenden des letzten Teils einer letzten Sperrliste, die auch die nächste Sperrliste sein kann, mit den darauffolgenden Zyklen erneut jeweils einen der Teile der ersten Sperrliste auszusenden.

Gemäß einerweiteren Ausführungsform der Leitstelle ist diese eingerichtet, nur Sperrlisten zu speichern und/oder auszusenden, deren Sperrlistenversionsnummern den Zugriffsberechtigungslistenversionsnummern von Zugriffsberechtigungslisten entsprechen, deren Gültigkeit noch nicht abgelaufen ist.

Außerdem betrifft die Erfindung ein System mit mehreren Windenergieanlagen nach einer der vorgenannten Ausführungsformen und einer Leitstelle nach einer der vorgenannten Ausführungsformen.

Weitere Ausführungsformen ergeben sich anhand der in den Figuren näher erläuterten Ausführungsbeispiele. Hierbei zeigen:
- Figur 1: eine Windenergieanlage,
- Figur 2: einen Windpark,
- Figur 3: eine Windenergieanlagensteuerung sowie eine Leitstelle und
- Figur 4: ein Ausführungsbeispiel der Schritte des Verfahrens.

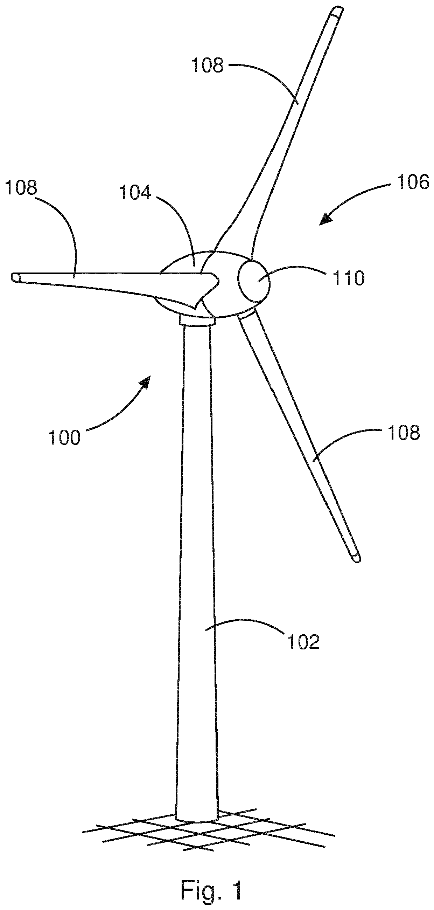

Figur 1 zeigt eine schematische Darstellung einer Windenergieanlage 100 gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage 100 durch den Wind in eine Drehbewegung versetzt und dreht somit auch einen elektrodynamischen Rotor oder Läufer eines Windenergieanlagengenerators, welcher direkt oder indirekt mit dem aerodynamischen Rotor 106 gekoppelt ist. Der elektrische Windenergieanlagengenerator ist in der Gondel 104 angeordnet und erzeugt elektrische Energie. Die Pitchwinkel der Rotorblätter 108 können durch Pitchmotoren an den Rotorblattwurzeln der jeweiligen Rotorblätter 108 verändert werden.

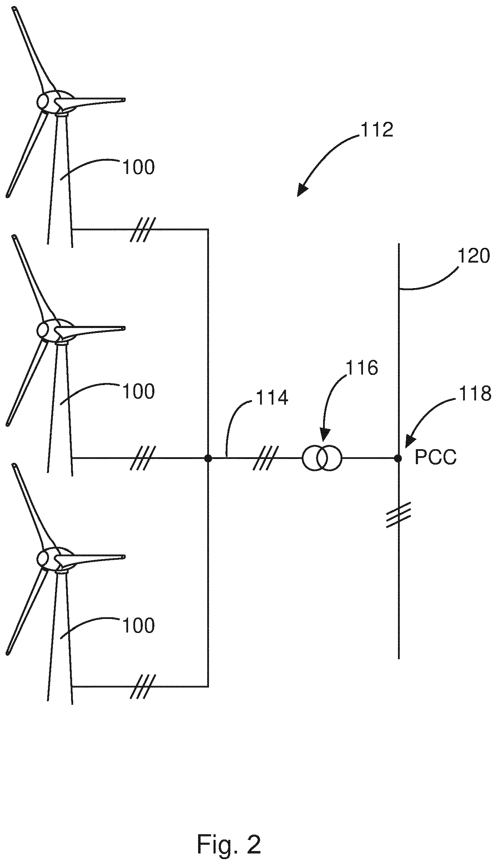

Figur 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen 100 eines Windparks 112. Die Windenergieanlagen 100 stellen ihre Leistung, nämlich insbesondere den erzeugten Strom, über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen.

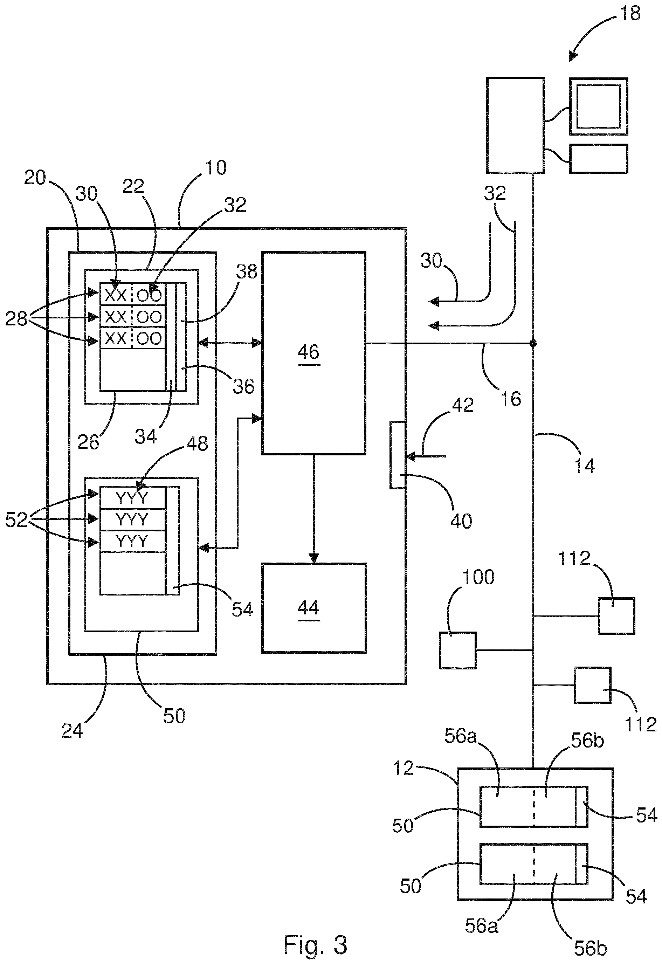

Figur 3 zeigt eine Windenergieanlagensteuerung 10 sowie eine Leitstelle 12. Die Windenergieanlagensteuerung 10 ist Bestandteil einer Windenergieanlage 100 oder eines Windparkreglers. Die Windenergieanlagensteuerung 10 ist mit der Leitstelle 12 über eine Datenverbindung 14 verbunden. Die Datenverbindung 14 ist vorzugsweise eine Internetverbindung 16. Neben der Windenergieanlagensteuerung 10 sind mit der Leitstelle 12 über die Datenverbindung 14 weitere Windparks 112 und einzelne Windenergieanlagen 100 verbunden. Ein Datenaustausch zwischen der Leitstelle 12 und der Windenergieanlagensteuerung 10 ist somit möglich. Außerdem ist ein Terminal 18, das beispielsweise ein internetfähiger Computer ist, ebenfalls über die Datenverbindung 14 mit der Windenergieanlagensteuerung 10 verbindbar.

Die Windenergieanlagensteuerung 10 weist einen Speicher 20 auf, der mehrere unterschiedliche Speichertypen umfasst. Zumindest ist dem in dem Speicher 20 ein Nur-Iese-Speicher 22 und ein Direktzugriffsspeicher 24 vorgesehen. Im Nur-lese-Speicher 22 ist eine Zugriffsberechtigungsliste 26 hinterlegt. Die Zugriffsberechtigungsliste 26 weist mehrere Einträge 28 auf, die jeweils zumindest eine Benutzerkennung 30 und ein Passwort 32 umfassen. Außerdem ist der Zugriffsberechtigungsliste 26 eine Zugriffsberechtigungslistenversionsnummer 34 und eine Gültigkeitsdauer 36 zugeordnet. Die Gültigkeitsdauer 36 ist als Zähler 38 ausgebildet. Die Zugriffsberechtigungsliste 26 ist gegen ein Umprogrammieren über die Datenverbindung 14 geschützt. Lediglich mit einer Eingabekonsole 40 lässt sich durch Eingabe eines Generalpassworts 42 die Zugriffsberechtigungsliste 26 aktualisieren.

Ferner sind durch eine Software der Windenergieanlagensteuerung 10 verschiedene Funktionen 44 über eine Zugriffssteuerung 46 aufrufbar. Ein Zugriff auf eine derartige Funktion 44 erfolgt beispielsweise indem ein Benutzer über das Terminal 18 und die Datenverbindung 14 seine Benutzerkennung 30 und sein Passwort 32 an die Windenergieanlagensteuerung 10 übersendet. Die Zugriffssteuerung 46 des Windenergieanlagensteuerungssystems 10 prüft, ob ein Eintrag 28 im Nur-Iese-Speicher 22 enthalten ist, der die Benutzerkennung 30 und das Passwort 32, die vom Terminal 18 empfangen wurden, aufweist. Ist dies der Fall, gibt die Zugriffssteuerung 46 die Funktion 44 für einen Zugriff erfindungsgemäß nur unter einer bestimmten Voraussetzung frei. Diese Voraussetzung ist erfüllt, wenn die empfangene Benutzerkennung 30 nicht als Sperrkennung 48 in der Windenergieanlagensteuerung 10 hinterlegt ist. Hierzu weist der Direktzugriffsspeicher 24 eine Sperrliste 50 auf, die mehrere Einträge 52 umfasst. In jedem Eintrag 52 ist eine Sperrkennung 48 enthalten.

Soll also ein Zugriff auf die Funktion 44 erfolgen, so darf in der Zugriffssteuerung 46 ein Vergleich nicht ergeben, dass die empfangene Benutzerkennung 30, die in einem Eintrag 28 im Nur-Iese-Speicher 22 enthalten ist, auch als Sperrkennung 48 im Direktzugriffsspeicher 24 enthalten ist, da in diesem Fall ein Zugriff auf die Funktion 44 verweigert wird.

Die Sperrliste 50 weist ebenfalls eine Sperrlistenversionsnummer 54 auf, und ist über die Datenverbindung 14 von der Leitstelle 12 aus der Ferne aktualisierbar. Hierzu sind in der Leitstelle eine Vielzahl von Sperrlisten 50 gespeichert, die zyklisch an alle mit der Leitstelle 12 verbundenen Windparks 112 und Windenergieanlagen 100 versendet werden. Die Sperrlisten 50 in der Leitstelle 12 weisen unterschiedliche Sperrlistenversionsnummern 54 auf und jede Windenergieanlagensteuerung 10 speichert nur die Sperrlisten 50 im Direktzugriffsspeicher 24, die eine Sperrlistenversionsnummer 54 aufweisen, die der Zugriffsberechtigungslistenversionsnummer 34 der eigenen aktuellen Zugriffsberechtigungsliste entsprechen.

Die Sperrlisten 50 werden aufgrund ihrer Größe in mehrere Teile 56a, 56b geteilt und mit jedem Zyklus nur einer der Teile versendet.

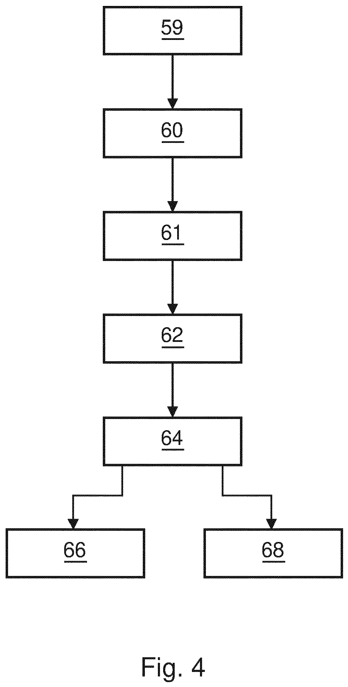

Figur 4 zeigt die Schritte des Verfahrens gemäß einem Ausführungsbeispiel. Erfindungsgemäß wird die Sperrliste 50 in einem ersten Schritt 59 von der Leitstelle 12 an die Windenergieanlagensteuerung 10 gesendet und im Schritt 60 in einem Direktzugriffsspeicher gespeichert. In einem Schritt 61 empfängt die Windenergieanlagensteuerung 10 von einem Terminal 18 eine Benutzerkennung 30. In einer Zugriffssteuerung 46 wird dann im Schritt 62 geprüft, ob die empfangene Benutzerkennung 30 in einem der Einträge 28 einer Zugriffsberechtigungsliste 26 enthalten ist. Ist dies der Fall, wird in einem Schritt 64 geprüft, ob die Benutzerkennung einer Sperrkennung 48 entspricht, die als Eintrag 52 in einer Sperrliste 50 enthalten ist. Ist eine der Benutzerkennung 30 entsprechende Sperrkennung 48 in der Sperrliste 50 enthalten, wird im Schritt 66 ein Zugriff auf die Funktion 44 verhindert. Ist keine Sperrkennung 48 in der Sperrliste 50 enthalten, die der Benutzerkennung 30 entspricht, aber eine der empfangenen Benutzerkennung 30 entsprechende Benutzerkennung 30 in der Zugriffsberechtigungsliste 26 enthalten, so wird im Schritt 68 ein Zugriff auf die Funktion 44 erlaubt.

## Patentansprüche

1. Verfahren für einen Zugriff auf mindestens eine Funktion (44) einer Windenergieanlage (100) mit einer Windenergieanlagensteuerung (10), wobei die Windenergieanlagensteuerung (10) eine Zugriffsberechtigungsliste (26) aufweist, die gegen Umprogrammierung, insbesondere durch einen Fernzugriff, gesichert ist, wobei die Zugriffsberechtigungsliste (26) mehrere Einträge (28) aufweist, die jeweils eine Benutzerkennung (30) und vorzugsweise ein Passwort (32) umfassen, und das Verfahren umfasst:
- Empfangen einer Sperrliste (50) durch die Windenergieanlagensteuerung (10) über einen Fernzugriff, wobei die Sperrliste (50) mindestens einen Eintrag (52) aufweist, der zumindest eine Sperrkennung (48) umfasst,
- Verhindern eines Zugriffs auf die mindestens eine Funktion, wenn über eine Eingabe eine Benutzerkennung (30) empfangen wird, die einer Sperrkennung (48) entspricht.

2. Verfahren nach Anspruch 1, wobei jeder Eintrag (28) in der Zugriffsberechtigungsliste (26) oder die Zugriffsberechtigungsliste (26) eine Gültigkeitsdauer (36), vorzugsweise höchstens drei Jahre oder höchstens fünf Jahre, aufweist, und ein Zugriff auf die mindestens eine Funktion (44) verhindert wird, wenn über eine Eingabe eine Benutzerkennung (30) empfangen wird, die einer Benutzerkennung (30) eines Eintrags der Zugriffsberechtigungsliste (26) entspricht, deren Gültigkeitsdauer (36) abgelaufen ist.

3. Verfahren nach Anspruch 1 oder 2, wobei die Gültigkeitsdauer (36) als Zähler (38) ausgebildet ist.

4. Verfahren nach einem der vorhergehenden Ansprüche, wobei ein Generalpasswort (42) in der Windenergieanlagensteuerung (10) hinterlegt ist und ein Zugriff auf die mindestens eine Funktion verhindert wird, wenn über eine Eingabe eine Benutzerkennung (30) empfangen wird, deren Gültigkeitsdauer (36) abgelaufen ist, wobei ein Zugriff auf die mindestens eine Funktion (44) gewährt wird, wenn über eine Eingabe das Generalpasswort (42) empfangen wird.

5. Verfahren nach einem der vorhergehenden Ansprüche, wobei ein Zugriff auf die Funktion (44) erlaubt wird, wenn über eine Eingabe eine Benutzerkennung (30) empfangen wird, die keiner Sperrkennung (48) entspricht und insbesondere die Gültigkeitsdauer (36) des Eintrags (28) mit der Benutzerkennung (30) noch nicht abgelaufen ist.

6. Verfahren nach einem der vorhergehenden Ansprüche, wobei der Zugriffsberechtigungsliste (26) eine Zugriffsberechtigungslistenversionsnummer (34) und der Sperrliste (50) eine Sperrlistenversionsnummer (54) zugeordnet ist,
wobei die Windenergieanlagensteuerung (10) eine Entscheidung, ob ein Zugriff auf die mindestens eine Funktion (44) verhindert oder erlaubt wird, nur unter Berücksichtigung der Sperrliste (50) trifft, die eine Sperrlistenversionsnummer (54) aufweist, die der Zugriffsberechtigungslistenversionsnummer (34) der aktuellsten Zugriffsberechtigungsliste (26) entspricht.

7. Verfahren nach einem der vorhergehenden Ansprüche, wobei in einer Leitstelle (12) mehrere Sperrlisten (50) bereitgestellt werden, die jeweils eine unterschiedliche Versionsnummer (54) aufweisen und die mehreren Sperrlisten (50) von der Leitstelle (12) zyklisch ausgesendet werden.

8. Verfahren nach Anspruch 7, wobei jede Sperrliste (50) in mehrere Teile (56a, 56b) unterteilt wird und mit jedem Zyklus jeweils ein Teil der Teile der ersten Sperrliste (50) ausgesendet wird, bis alle Teile der ersten Sperrliste (50) ausgesendet sind, woraufhin dann in den folgenden Zyklen jeweils ein Teil der Teile einer nächsten Sperrliste ausgesendet wird, bis alle Teile der nächsten Sperrliste ausgesendet sind, wobei nach Aussenden des letzten Teils einer letzten Sperrliste mit den darauffolgenden Zyklen erneut jeweils einer der Teile der ersten Sperrliste ausgesendet wird.

9. Verfahren nach einem der vorhergehenden Ansprüche, wobei in der Leitstelle (12) nur Sperrlisten (50) gespeichert und/oder ausgesendet werden, die Sperrlistenversionsnummern (50) aufweisen, die den Zugriffsberechtigungslistenversionsnummern (34) von Zugriffsberechtigungslisten (26) entsprechen, deren Gültigkeitsdauer (36) noch nicht abgelaufen ist.

10. Windenergieanlagensteuerung (10) für ein Verfahren nach einem der Ansprüche 1 bis 9, wobei die Windenergieanlagensteuerung (10) ein Nur-Iese-Speicher (22), ROM, und einen Direktzugriffsspeicher (24), RAM, aufweist, wobei die Zugriffsberechtigungsliste (26) im Nur-Iese-Speicher (22) und die Sperrliste (50) im Direktzugriffsspeicher (24) gespeichert ist, wobei die Zugriffsberechtigungsliste (26) mehrere Einträge (28) aufweist, die jeweils eine Benutzerkennung (30) und vorzugsweise ein Passwort (32) umfassen, und die Sperrliste (50) mindestens einen Eintrag (52) mit einer Sperrkennung (48) umfasst, wobei die Windenergieanlagensteuerung (10) eingerichtet ist, um einen Zugriff auf die mindestens eine Funktion (44) zu verhindern, wenn über eine Eingabe eine Benutzerkennung (30) empfangen wird, die einer Sperrkennung (48) entspricht.

11. Windenergieanlagensteuerung (10) nach Anspruch 10, wobei ein Zugriff auf die Funktion (44) erlaubt wird, wenn über die Eingabe eine Benutzerkennung (30) empfangen wird, die keiner Sperrkennung entspricht und die in einem Eintrag (28) in der Zugriffsberechtigungsliste (26) enthalten ist, deren Gültigkeitsdauer (36) noch nicht abgelaufen ist.

12. Windenergieanlage (100) mit einer Windenergieanlagensteuerung (10) nach Anspruch 10 oder 11, wobei die Windenergieanlage (100) eingerichtet ist das Verfahren nach einem der Ansprüche 1 bis 9 auszuführen.

13. Leitstelle für ein Verfahren nach einem der Ansprüche 1 bis 9, wobei die Leitstelle (12) eingerichtet ist, mehrere Sperrlisten (50) bereitzustellen und an mehrere Windenergieanlagensteuerungen (10) zyklisch auszusenden.

14. Leitstelle nach Anspruch 13, wobei die Leitstelle (12) eingerichtet ist, jede Sperrliste (50) in mehrere Teile (56a, 56b) zu unterteilen und mit jedem Zyklus jeweils einen Teil der Teile der ersten Sperrliste (50) auszusenden, bis alle Teile der ersten Sperrliste ausgesendet sind, und um daraufhin in den folgenden Zyklen jeweils einen Teil der Teile einer nächsten Sperrliste auszusenden, bis alle Teile der nächsten Sperrliste ausgesendet sind, und um nach Aussenden des letzten Teils einer letzten Sperrliste mit den darauffolgenden Zyklen erneut jeweils einen der Teile der ersten Sperrliste auszusenden und/oder
nur die Sperrlisten zu speichern und/oder auszusenden, die Sperrlistenversionsnummern (54) aufweisen, die den Zugriffsberechtigungslistenversionsnummern (34) von Zugriffsberechtigungslisten (26) entsprechen, deren Gültigkeitsdauer (36) noch nicht abgelaufen ist.

15. System mit mehreren Windenergieanlagen (100) nach Anspruch 12 und einer Leitstelle (12) nach Anspruch 13 oder 14.
